# FASCICULE DE BREVET EUROPEEN

(11) **EP 0 960 524 B1**
(45) Date de publication et mention de la délivrance du brevet: **01.08.2001**
(21) Numéro de dépôt: 98900973.3
(22) Date de dépôt: 05.02.1998
(51) Int. Cl.: H04N 1/32

(54) **PROCEDE DE TRAITEMENT D'IMAGES ET DISPOSITIF POUR SA MISE EN OEUVRE**
VERFAHREN UND VORRICHTUNG ZUR BILDVERARBEITUNG
METHOD FOR PROCESSING IMAGES AND DEVICE FOR IMPLEMENTING SAME

(30) Priorité: 13.02.1997 CH 31697
(43) Date de publication de la demande: 01.12.1999
(73) Titulaire: Fotowire DEvelopment S.A., 1204 Genève (CH)
(72) Inventeur: SEREX, Patrick, CH-1222 Vésenaz (CH); TAWIL-KUMMERMAN, Alan, CH-1222 Vésenaz (CH); CERUTTI, Daniel, F-74160 Collonge-sous-Salève (FR)
(74) Mandataire: Micheli & Cie
(86) Numéro de dépôt international: IB9800145
(87) Numéro de publication internationale: WO9836556

(56) Documents cités:
- EP-A- 0 478 340
- EP-A- 0 756 414
- WO-A-92/05660
- US-A- 4 960 993
- US-A- 5 574 533

## Description

La présente invention se rapporte à un procédé de traitement d'images et plus particulièrement à un procédé permettant de traiter une image numérique en vue d'en obtenir un tirage photographique. L'invention concerne également une installation pour la mise en oeuvre de ce procédé.

US-A-4 960 993 décrit un procédé de traitement d'une image numérique en vue d'en obtenir son traitement par une installation automatique de développement de films photographiques.

Il existe de nombreux dispositifs comme des appareils photographiques numériques, ou des caméras digitales qui permettent l'acquisition d'images sous forme numérique. La visualisation des images ainsi obtenues peut s'effectuer par exemple à l'aide d'un ordinateur personnel ou d'un téléviseur équipé d'un lecteur approprié. L'utilisation d'un ordinateur personnel est parfaitement adaptée à la manipulation de telles images qui peuvent être retouchées avant leur visualisation ou transmises électroniquement sur un réseau. En revanche, il est souvent souhaitable de disposer d'une sortie papier de ces images et le périphérique permettant l'impression de ces images n'offre souvent pas la qualité requise. En effet, les imprimantes en couleur à jet d'encre par exemple ont une résolution d'environ 300 lignes par pouce ce qui n'est pas adapté à la restitution d'une image photographique numérique. Par comparaison, la résolution que l'on peut obtenir avec un développement chimique sur un film 35 mm est d'environ 2500 lignes par pouce. D'autres dispositifs d'impression, telles que des imprimantes à sublimation de teinte (dye sublimation printers), sont réservées à une utilisation professionnelle à cause de leur prix très élevé. De plus le traitement entièrement numérique lié à ces dispositifs implique que les pixels transférés sur le support papier présentent tous la même forme, généralement carrée, ce qui induit des effets d'escalier dans le rendu final du tirage. Le but de la présente invention est de remédier aux inconvénients cités ci-dessus en offrant un procédé de traitement d'image numérique, permettant à l'utilisateur d'obtenir un tirage de qualité photographique à partir d'une image numérique préalablement sauvegardée sur un support adéquat. Ce but est atteint par un procédé qui se distingue par les caractéristiques énumérées à la revendication 1, ainsi qu'une installation telle que revendiquée à la revendication 6. D'autres avantages, comme la possibilité de traiter des images séparément ou par lot, de même que l'intégration du traitement sans intervention manuelle dans une chaîne de développement conventionnelle ressortent des revendications dépendantes et de la description qui suit.

Les appareils photographiques numériques permettent la génération d'une image sous forme numérique, ces images sont stockées dans une mémoire de l'appareil ou dans une carte à mémoire comprise dans de tels appareils. Pour visualiser ces images, il est nécessaire de charger ces images dans un dispositif de traitement d'information comme un ordinateur personnel ou une station de travail conventionnelle. Le chargement des images s'effectue en connectant l'appareil au port sériel ou parallèle d'un ordinateur personnel et en les sauvant sur une mémoire de masse de l'ordinateur telle qu'un disque magnétique. Ce transfert peut également se faire, si les images sont stockées sur une carte à mémoire, par l'intermédiaire d'un lecteur de carte approprié connecté à l'ordinateur. Une liaison sans support physique comme l'utilisation d'un signal infra-rouge peut également être envisagée pour ce transfert. Les images, une fois mémorisées dans l'ordinateur, peuvent subir tout traitement utile avant d'être affichées sur l'écran de ce dernier. On citera à titre d'exemple non limitatif les logiciels permettant de retoucher l'aspect esthétique des images ou leur encryptage si leur nature l'exige.

Les images que l'on souhaite traiter peuvent également être générées par d'autres dispositifs, il peut s'agir d'images produites à l'aide d'un scanner, ou de tout autre dispositif permettant de numériser une image. Le procédé objet de la présente invention consiste en une série d'étapes qui permettent à l'utilisateur d'obtenir un tirage photographique traditionnel à partir d'images numérisées. Ce procédé va, dans un premier temps, être décrit en relation avec les opérations que l'utilisateur doit effectuer. L'image numérique à traiter doit préalablement être mémorisée dans un ordinateur muni de moyens de communication. Ces moyens de communication peuvent être constitués par tous moyens classiques, tels qu'un modem, une carte d'interface numérique ou des moyens centralisés accessibles par l'intermédiaire d'un réseau local par exemple. L'image sauvegardée sous la forme d'un fichier sur le disque dur de l'ordinateur peut préalablement être manipulée ou améliorée par un logiciel de traitement d'image jusqu'à l'obtention d'une image définitive. Lorsque l'utilisateur désire obtenir un tirage photographique de l'image, il va tout d'abord par l'intermédiaire des moyens de communication appeler et établir une session avec un serveur d'informations. On notera que ce serveur d'informations, constitué d'un système informatique traditionnel, peut être localisé physiquement n'importe où. Dans une forme préférée du procédé, le serveur d'informations sera une machine connectée au réseau INTERNET ce qui présente l'avantage d'offrir un accès aisé à des coûts très modestes. Le serveur d'informations peut être accédé dans des variantes par l'intermédiaire d'autres systèmes de communication comme des lignes louées, un réseau public à commutation de paquets ou tous autres moyens permettant le transfert de données numériques.

Une fois la communication établie, le serveur d'informations va solliciter l'utilisateur par l'intermédiaire d'un programme de saisie pour lui permettre d'introduire les données nécessaires au traitement de sa requête. Dans le cas ou la communication est établie par l'intermédiaire d'INTERNET, les techniques connues sous les noms 'activex' ou 'plug-in' peuvent être utilisées. Ces techniques consistent à télécharger les logiciels ou parties de logiciels permettant la saisie et le traitement d'une requête. Ce téléchargement s'effectuant au moment où l'utilisateur établit une session avec le serveur d'information, lorsque ce dernier détermine que les logiciels nécessaires ne sont pas présents sur l'ordinateur local.

Les données en question sont constituées d'une part des données permettant d'identifier l'utilisateur, telles que son nom, son adresse et éventuellement des informations relatives au mode de paiement envisagé, et d'autre part par des informations relatives à l'image à traiter. Il s'agira en l'occurrence du nom du fichier représentant l'image, du nombre et du format des épreuves désirées ainsi que de la qualité du papier à utiliser. Par analogie il s'agit des mêmes informations qui figurent sur les pochettes utilisées pour l'envoi d'un film par voie postale à un laboratoire de développement.

Lorsque l'utilisateur accède la page concernée sur le serveur d'information, ce dernier va tout d'abord proposer à l'utilisateur une liste des laboratoires de développement équipés pour traiter de telles requêtes. Une fois le laboratoire de traitement choisi par l'utilisateur, le serveur d'informations invite l'utilisateur à saisir les paramètres nécessaires au traitement de sa requête.

La saisie une fois validée, les opérations que l'utilisateur doit effectuer sont terminées. Il recevra ultérieurement du laboratoire de développement photographique choisi le nombre de tirages désirés.

Dans une variante, la préparation de la requête de traitement peut s'effectuer en mode local, c'est-à-dire préalablement à l'établissement d'une communication avec le serveur d'informations. Dans ce cas la saisie des informations à transmettre s'effectue par l'intermédiaire d'un programme de saisie résidant sur l'ordinateur de l'utilisateur qui pourra par exemple être fourni par les laboratoires de développement ou être accessible par téléchargement sur le réseau. La requête une fois mise en forme est ensuite transférée vers le serveur d'informations par les moyens de communications.

Les opérations qui suivent sont effectuées par le serveur d'informations. Lorsque les informations émanant de l'utilisateur ont été reçues par le serveur d'informations, ce dernier va mettre en forme une requête de traitement qui se compose généralement d'un en-tête ou 'header' comprenant les données relatives à l'utilisateur ainsi que les paramètres de traitement mentionnés ci-dessus. Cet en-tête est suivi des données représentant l'image à traiter. Ces données seront de préférence dans un format standard utilisé pour décrire une image comme les formats JPEG ou TIFF par exemple. Cette requête, une fois mise en forme, sera mémorisée sur le serveur d'informations dans un espace réservé au laboratoire de traitement choisi par l'utilisateur.

Dans une variante, l'utilisateur ne choisit pas le laboratoire de traitement auquel il désire confier le développement de ces images. Le serveur d'informations compare les données concernant l'utilisateur avec celles figurant dans une base de données locale, et détermine lui-même le laboratoire de développement situé le plus près géographiquement de l'utilisateur et capable de traiter une telle requête.

Pour traiter ce genre de requête, le laboratoire de développement doit être équipé des éléments matériels et logiciels suivants:

Un ordinateur conventionnel muni de moyens de communication qui sera dénommé dans la description qui suit 'processeur d'images'. Ce processeur d'images est connecté à un dispositif d'enregistrement d'images ou 'film recorder' c'est-à-dire un appareil recevant en entrée une image numérique et produisant en sortie, par illumination d'une pellicule photosensible, un négatif de cette image. Les négatifs ainsi obtenus sont ensuite traités de manière conventionnelle par le laboratoire pour l'obtention des tirages désirés. Le processeur d'images comporte les programmes qui lui permettent de piloter le dispositif d'enregistrement d'images ainsi que les logiciels nécessaires au transfert de données numériques depuis le serveur d'informations intermédiaire sur le réseau ou directement depuis l'ordinateur de l'utilisateur.

Le processeur d'images comporte les programmes et les interfaces nécessaires au bon déroulement des étapes qui vont être décrites ci-dessous. Les logiciels prévus sont développés de telle façon que les fonctions qui suivent puissent se dérouler soit en parallèle sur un seul et même calculateur (CPU) ou au contraire sur plusieurs calculateurs distribués, ces derniers pouvant être répartis dans une seule machine ou dans plusieurs machines connectées entre elles. Lorsque ces fonctions se déroulent sur un seul calculateur, on choisira de préférence un système d'exploitation dit multi-tâche ou multi-processus comme UNIX ou WINDOWS NT (marque déposée).

Une des tâches du processeur d'images est, par le biais d'un 'polling', d'interroger à intervalles de temps pré-définis le serveur d'informations afin de déterminer si une requête de traitement le concernant est en attente. Si tel est le cas, le processeur d'images va télécharger les données transférées par l'utilisateur. Ce transfert effectué, le processeur d'images mémorise temporairement une copie de la requête de traitement, c'est-à-dire l'image à traiter ainsi que les informations permettant d'identifier le donneur d'ordre. Ce transfert de données achevé, le processeur d'images quittance le bon déroulement du transfert ce qui permet au serveur d'informations de supprimer le cas échéant la copie des informations qu'il conserve. L'étape suivante impartie au processeur d'images consiste à analyser les données reçues. Concernant l'image à traiter, il détermine le format de cette dernière et met en forme cette dernière dans un format acceptable par le dispositif d'enregistrement d'images. Cette conversion de format, qui peut s'accompagner d'une décompression de l'image, est réalisée entièrement par des opérations mathématiques par l'intermédiaire d'un logiciel ad-hoc et peut de ce fait être adaptée aux nouveaux formats de codage d'image qui pourraient s'imposer sur le marché. Lorsque les opérations de conversion et de mise en forme de l'image sont achevées, le processeur d'image traite les informations permettant d'identifier le donneur d'ordre. Ce traitement est réalisé par exemple en comparant les données reçues avec celles stockées dans une base de données client préalablement enregistrées sur le processeur d'images. Si le client n'existe pas encore, il est simplement rajouté à la base de données. Si au contraire le client existe déjà, le processeur d'images peut exécuter d'autres vérifications comme la validation des données comptables relatives à cet utilisateur.

L'étape ou la tâche suivante consiste à générer, à partir des données transmises par l'utilisateur, une image numérique virtuelle qui est destinée à être enregistrée sur le support photo-sensible du dispositif d'enregistrement d'image. Cette image représente un code-barre, portant les informations identifiant l'utilisateur ainsi que le traitement désiré (type de papier, nombre de tirage etc.). Par analogie au traitement manuel des bobines l'image générée représente le raccord traditionnellement utilisé entre deux bobines de pellicule pour permettre leur traitement automatique par une installation de développement. Il peut aussi par exemple s'agir d'un numéro d'ordre unique et incrémentiel qui, en relation avec les informations de la base de données client, permet la mise sous enveloppe automatique des photographies obtenues en fin de traitement par le laboratoire.

Dans le cas du traitement manuel des films à développer, l'opérateur raccorde les rouleaux de pellicules reçues à l'aide d'un raccord se présentant généralement sous la forme d'une bande de matière plastique munie d'un code-barre et comportant des bords adhésifs pour permettre de solidariser les extrémités de deux rouleaux de pellicule. Les pellicules, une fois assemblées par l'intermédiaire de ce raccord, sont montées sur un chargeur qui alimente l'installation de développement automatique.

L'image générée par le processeur d'images correspond en tous points au raccord physique utilisé dans le traitement manuel des films à développer. L'avantage de générer cette image et de l'enregistrer grâce au dispositif d'enregistrement d'images réside principalement dans le fait que ceci ne nécessite aucune intervention manuelle. Il est ainsi possible de générer automatiquement un train de négatifs prêts au traitement même si pour un utilisateur il n'y a qu'un petit nombre, voire une seule image, à développer.

L'étape suivante consiste à transférer l'image virtuelle suivie des images à traiter vers le dispositif d'enregistrement d'images qui va produire par illumination d'un support photosensible un train de négatif précédé d'un raccord prêt au traitement par l'installation de développement.

Les différentes étapes du procédé, à savoir le transfert des informations depuis le serveur d'informations, l'analyse et la mise en forme des données reçues, la génération de l'image virtuelle représentant le raccord et la soumission des données au dispositif d'enregistrement d'images peuvent s'effectuer de façon asynchrone, certaines étapes prenant plus de temps que d'autres en fonction de la capacité de traitement des différents éléments constitutifs du processeur d'images. Il est ainsi prévu dans le processeur d'images, un stockage temporaire des informations lors du traitement. Il est en effet possible que la tâché qui doit transférer les données depuis le serveur d'informations soit en mesure de récupérer des données très rapidement alors que celle dévolue au transfert de données mise en forme vers le dispositif d'enregistrement d'images n'est pas en mesure d'assurer une cadence aussi élevée. Dans ce cas on mémorisera temporairement les données sur le processeur d'images de sorte que la séquence des opérations puisse être respectée. Pour des raisons de sécurité, on peut rendre le système redondant en le paramétrant pour qu'à chaque instant dans la chaîne de traitement on ait en permanence au moins deux copies des données à traiter.

Dans des variantes du procédé décrit ci-dessus, d'autres échanges d'informations peuvent s'opérer entre les différents ordinateurs. On citera à titre d'exemple l'envoi d'une quittance envoyée à l'utilisateur par le serveur d'informations lorsque ce dernier a transféré l'image à traiter au processeur d'images. Cette quittance peut être réalisée notamment sous forme d'un courrier électronique envoyé à l'utilisateur.

On remarquera également que dans le procédé décrit le serveur d'informations ne sert que de relai et de mémoire de stockage temporaire pour les images à traiter. Ce serveur d'informations peut être omis, dans ce cas, l'utilisateur établit une communication directement avec le processeur d'images situé dans le laboratoire de développement. Les mêmes données que celles transmises vers le serveur d'informations sont transférées directement vers le processeur d'images. Cependant dans le cas d'un transfert direct, l'utilisateur doit connaître les coordonnées (adresse électronique, numéro d'appel, etc.) du processeur d'images. Alors que si le serveur d'informations est utilisé et connecté à INTERNET, il suffit de connaître le nom de domaine (DNS) de cette machine pour accéder à ce service.

Les données transmises entre l'utilisateur et le serveur d'information ou entre ce dernier et le processeur d'images peuvent être encryptées lorsque la confidentialité l'exige. De préférence on choisira un système d'encryptage à clé publique. On notera qu'il n'est pas nécessaire dans la plupart des cas d'encrypter l'intégralité des données. En effet, il suffit par exemple d'encrypter l'en-tête de la requête (les données relatives à l'utilisateur) pour garantir un premier niveau de sécurité et ne pas pénaliser les performances du système. Si l'on désire une confidentialité accrue, et qu'il est nécessaire de chiffrer l'image elle même, on a le choix entre deux alternatives. La première consiste à encrypter la totalité de l'image. La seconde consiste à n'encrypter qu'une partie de l'image. En effet, de nombreux formats standard utilisés pour représenter une image (comme le format JPEG par exemple) comporte au début du fichier une série de tables d'index qui décrivent l'organisation du reste du fichier. Il est alors possible de n'encrypter que les tables d'index. Ainsi il n'est pas possible de reconstituer l'image sans avoir la clé de chiffrage. On notera encore que ces opérations d'encryptage peuvent être réalisées de plusieurs façons différentes. Les données peuvent être encryptées en mode local, c'est-à-dire avant d'être transmises sur le réseau et décryptées par le récepteur final (le processeur d'images). Il est également possible d'envisager un encryptage dynamique qui s'opère simultanément à la transmission des données.

L'installation nécessaire à la mise en oeuvre du procédé objet de l'invention comporte les éléments suivants: du côté de l'utilisateur, un dispositif de traitement d'informations comme un ordinateur personnel, muni de moyens de communication est requis. Le serveur d'informations qui comme on l'a vu est optionnel, comprend un ordinateur muni de moyens de communication ainsi que des logiciels nécessaires à la saisie d'informations et au transfert de données numériques. A l'autre bout de la chaîne, le laboratoire de développement doit être équipé d'un processeur d'images qui est constitué d'un ordinateur conventionnel muni de moyens de communication. Le processeur d'images est connecté à un dispositif d'enregistrement d'images. Le processeur d'images est équipé des logiciels nécessaires pour établir une communication suivie d'un transfert de données avec le serveur d'informations ou l'utilisateur final. Enfin les pilotes logiciels (driver) nécessaires pour piloter le dispositif d'enregistrement d'images seront également installés sur le processeur d'images.

Ce procédé de traitement d'une image numérique est extrêmement souple et simple à mettre en oeuvre par l'utilisateur puisqu'il est guidé dans les informations à saisir une fois qu'il a établi une communication avec le serveur d'informations. Du côté du laboratoire, ce procédé permet de traiter des requêtes automatiquement et de produire sans intervention manuelle, un train de négatifs séparés par les informations relatives aux donneurs d'ordres qui est prêt à être traiter dans une installation classique de développement de pellicules photographiques.

## Revendications

1. Procédé de traitement d'une image numérique en vue d'en obtenir son traitement par une installation automatique de développement de films photographiques comprenant les étapes suivantes :
a) préparation d'une requête de traitement comprenant les informations relatives à l'image à traiter, ainsi que les données permettant d'identifier l'utilisateur;
b) transmission de la requête de traitement à un processeur d'images;
c) mémorisation et traitement de la requête par le processeur d'images;
caractérisé en ce qu'urne image virtuelle identifiant l'utilisateur ainsi que le traitement désiré est générée dans la mémoire du processeur d'images, cette image virtuelle, ainsi que les images à développer, étant ensuite enregistrées sur un support photosensible par l'intermédiaire d'un dispositif d'enregistrement d'images connecté au processeur d'images.

2. Procédé selon la revendication 1, caractérisé en ce que la transmission de la requête de traitement de l'utilisateur vers le processeur d'images se fait par l'intermédiaire d'un serveur d'informations qui mémorise temporairement les données numériques, le processeur d'images interrogeant à intervalles de temps variables ledit serveur d'informations sur la présence d'une requête de traitement pour en effectuer le cas échéant son téléchargement.

3. Procédé selon la revendication 1 ou la revendication 2,
caractérisé en ce que le processeur d'images quittance la réception d'une requête de traitement à l'utilisateur par l'envoi d'un message électronique.

4. Procédé selon l'une des revendications précédentes,
caractérisé en ce que les données transmises sont compressées avant d'être transférées et décompressées après leur réception.

5. Procédé selon l'une des revendications précédentes,
caractérisé par le fait que les données sont encryptées lors de leur transfert.

6. Installation comprenant des moyens pour la mise en oeuvre du procédé selon la revendication 1, caractérisée en ce qu'elle comporte un processeur d'images constitué d'un ordinateur muni de moyens de communication, un dispositif d'enregistrement d'images connecté et piloté par le processeur d'images ainsi qu'au moins un ordinateur muni de moyens de communication.

7. Installation selon la revendication 6, caractérisée en ce qu'elle comporte au moins un serveur d'informations intermédiaire permettant de mémoriser les données reçues de l'utilisateur et de les transmettre vers le processeur d'images.

8. Installation de développement photographique,
caractérisée en ce qu'elle comporte un dispositif selon l'une des revendications 6 ou 7.

## Claims

1. A method for processing a digitised image in view of processing the same in an automatic installation for developing photographic films, including the following steps of:
a) preparing a request for processing including information concerning the image to be processed as well as data enabling an identification of the user;
b) transmitting the request for processing to an image processor; and of
c) storing in a memory and processing the request by the image processor; characterized in that a virtual image identifying the user as well as the processing desired is generated in the memory of the image processor, this virtual image as well as the images to be developed being subsequently recorded on a photo-sensitive support via an image recording device connected to the image processor.

2. A method according to claim 1, characterized in that the transmission of the request for processing from the user to the image processor is carried out via an information server which stores the digital data temporarily in a memory, the image processor interrogating at variable intervalls of time said information server on the presence of a request for processing, in order to carry out a downloading if required.

3. A method according to claim 1 or claim 2, characterised in that the image processor acknowledges the reception of a request for processing from the user by sending an electronic message.

4. A method according to one of the preceding claims, characterised in that the data transmitted are compressed before being transferred and decompressed after their reception.

5. A method according to one of the preceding claims, characterised in that the data are encrypted during their transfer.

6. An installation comprising means for carrying out the method according to claim 1, characterised in that it includes an image processor comprised of a computer provided with communication means, an image recording device connected and driven by the image processor, as well as at least one computer provided with communication means.

7. An installation according to claim 6, characterised in that it includes at least one intermediate information server, which makes it possible to store in a memory the data received from the user and to transmit the same to the image processor.

8. An installation for developing photographs, characterised in that it includes a device according to one of claims 6 and 7.

## Patentansprüche

1. Verfahren zur Verarbeitung eines digitalen Bildes in Hinblick darauf, seine Verarbeitung durch eine automatische Anlage für die Entwicklung photographischer Filme zu erreichen, die folgenden Schritte umfassend:
a) Vorbereitung einer Verarbeitungsanforderung mit den das zu verarbeitende Bild betreffenden Daten sowie mit den Daten, die es gestatten, den Benutzer zu identifizieren,
b) Übertragung der Verarbeitungsanforderung an einen Bildprozessor;
c) Speicherung und Bearbeitung der Anforderung durch den Bildprozessor;
dadurch gekennzeichnet, dass im Speicher des Bildprozessors ein den Benutzer und die gewünschte Verarbeitung identifizierendes virtuelles Bild erzeugt wird, wobei dieses virtuelle Bild sowie die zu entwickelnden Bilder danach vermittels einer an den Bildprozessor angeschlossenen Bildaufzeichnungsvorrichtung auf einem lichtempfindlichen Träger aufgezeichnet werden.

2. Verfahren gemäss Anspruch 1, dadurch gekennzeichnet, dass die Übertragung der Verarbeitungsanforderung vom Benutzer zum Bildprozessor über einen Datenserver erfolgt, der die digitalen Daten vorübergehend speichert, wobei der Bildprozessor den benannten Datenserver in variablen Zeitabständen über das Vorliegen einer Verarbeitungsanforderung befragt, um gegebenenfalls deren Fernladen vorzunehmen.

3. Verfahren gemäss Anspruch 1 oder Anspruch 2, dadurch gekennzeichnet, dass der Bildprozessor dem Benutzer durch Zusendung einer elektronischen Nachricht den Empfang einer Verarbeitungsanforderung quittiert.

4. Verfahren gemäss einem der vorangehenden Ansprüche, dadurch gekennzeichnet, dass die übertragenen Daten vor ihrer Übertragung komprimiert und nach ihrem Empfang dekomprimiert werden.

5. Verfahren gemäss einem der vorangehenden Ansprüche, dadurch gekennzeichnet, dass die Daten während ihrer Übertragung verwürfelt sind.

6. Anlage mit Mitteln zur Durchführung des Verfahrens gemäss Anspruch 1,
dadurch gekennzeichnet, dass sie einen aus einem mit Kommunikationsmitteln ausgerüsteten Computer bestehenden Bildprozessor, eine mit dem Bildprozessor verbundene und durch ihn gesteuerte Vorrichtung zur Bildaufzeichnung sowie zumindest einen mit Kommunikationsmitteln ausgerüsteten Computer umfasst.

7. Anlage gemäss Anspruch 6, dadurch gekennzeichnet, dass sie zumindest einen Zwischendatenserver umfasst, der es gestattet, die vom Benutzer empfangenen Daten zu speichern und sie zum Bildprozessor zu übertragen.

8. Photographische Entwicklungsanlage, dadurch gekennzeichnet, dass sie eine Vorrichtung gemäss einem der Ansprüche 6 oder 7 umfasst.
